# FASCICULE DE BREVET EUROPEEN

(11) **EP 1 135 045 B1**
(45) Date de publication et mention de la délivrance du brevet: **12.03.2003**
(21) Numéro de dépôt: 99949042.8
(22) Date de dépôt: 04.10.1999
(51) Int. Cl.: A47J 37/08

(54) **GRILLE-PAIN ELECTRIQUE EQUIPE D'UN ENSEMBLE ELECTROAIMANT/INTERRUPTEUR**
ELEKTRISCHER TOASTER MIT EINER ELEKTROMAGNETISCHEN SCHALTEINHEIT
ELECTRIC TOASTER EQUIPPED WITH ELECTROMAGNET/SWITCH ASSEMBLY

(43) Date de publication de la demande: 26.09.2001
(73) Titulaire: Seb S.A., 69132 Ecully Cedex (FR)
(72) Inventeur: MAUFFREY, Guy, F-70280 Breuchotte (FR)
(74) Mandataire: Martin, Didier
(86) Numéro de dépôt international: FR9902365
(87) Numéro de publication internationale: WO01024675

(56) Documents cités:
- DE-C- 3 731 959
- US-A- 3 869 970
- US-A- 5 304 782
- US-A- 5 918 532

## Description

### DOMAINE TECHNIQUE

La présente invention se rapporte au domaine technique général des grille-pain électriques à usage domestique destinés à assurer le grillage de produits panifiés.

La présente invention concerne un grille-pain électrique comportant un bâti principal incluant :
- un compartiment de grillage associé à une ou plusieurs résistance(s) électrique(s),
- un chariot porte-pain monté mobile dans le compartiment de grillage entre une position basse de grillage du pain permettant de fermer le circuit de puissance du (des) résistance(s) électrique(s), ledit chariot étant maintenu dans cette position par interaction avec un électroaimant, et une position haute destinée à l'introduction du pain,
- des moyens de sécurité électrique destinés à interrompre l'alimentation électrique de la (des) résistance(s) électrique(s) en fin de cycle de grillage indépendamment de la position du chariot porte pain.

### TECHNIQUE ANTERIEURE

II est déjà connu de réaliser des grille-pain électriques avec un chariot porte-pain monté mobile dans le compartiment de grillage de l'appareil de telle façon que lorsque le chariot porte-pain est dans sa position basse de grillage, il soit à même d'engager directement ou indirectement des lames de contact électrique susceptibles de fermer le circuit de puissance des résistances électriques de l'appareil. Dans cette position, l'électroaimant disposé généralement au fond du compartiment de grillage, est activé et maintient, par le biais d'une masse polaire, le chariot porte-pain dans sa position de grillage. De tels systèmes, largement connus, donnent généralement satisfaction mais souffrent d'un inconvénient lié à la possibilité de blocage du chariot porte-pain en position basse de grillage, par exemple en raison de l'introduction d'un article panifié de dimensions sensiblement trop importantes en regard de la fente d'introduction du grille-pain. En effet, dans une telle situation, il s'avère qu'en fin de grillage, l'électroaimant est effectivement désactivé, mais le chariot porte-pain étant alors bloqué et ne pouvant remonter, les contacts électriques sont toujours fermés et les résistances électriques toujours alimentées. Il s'ensuit alors un risque de combustion complète de l'article panifié pouvant conduire au bout d'un certain temps à d'éventuels dommages plus importants.

C'est la raison pour laquelle il a déjà été envisagé des dispositifs de sécurité électrique susceptibles d'interrompre l'alimentation électrique des résistances électriques de grillage en fin de cycle de grillage indépendamment de la position du chariot porte pain, c'est à dire même lorsque le chariot porte-pain est bloqué dans sa position basse de grillage.

On connaît ainsi, notamment par le document US-5 304 782, des grille-pain correspondant au préambule de la revendication 1 et mettant en oeuvre une pièce montée mobile sur le chariot porte-pain lui-même, une telle pièce servant d'interface avec l'électroaimant et permettant à la fin du cycle de cuisson un relâchement de cette pièce ouvrant le circuit d'alimentation des résistances électriques. La pièce d'interface est montée mobile sous l'action d'un ressort et permet d'ouvrir le circuit des résistances électriques même lorsque le chariot porte-pain reste bloqué en position de grillage. Un tel système donne généralement satisfaction mais souffre de divers inconvénients liés à sa réalisation et à la précision nécessaire du déplacement de la pièce pour ouvrir les contacts électriques.

### EXPOSE DE L'INVENTION

Les objets assignés à l'invention visent en conséquence à porter remède aux inconvénients des dispositifs de l'art antérieur connu et à proposer un nouveau grille-pain électrique pourvu de moyens de sécurité, électrique particulièrement simples et bon marché à fabriquer et à monter, tout en étant particulièrement fiables.

Un autre objet de l'invention vise à proposer un nouveau grille-pain électrique dont les moyens de sécurité sont particulièrement sûrs, et permettent d'éviter notamment les possibilités de blocage ou de dysfonctionnement des moyens de sécurité.

Un autre objet de l'invention vise à proposer un nouveau grille-pain électrique dont le montage des moyens de sécurité est particulièrement simple à réaliser.

Un autre objet de l'invention vise à proposer un nouveau grille-pain électrique équipé de moyens de sécurité présentant une bonne tenue dans le temps de ses propriétés de connexion/déconnexion électrique.

Les objets assignés à l'invention sont atteints à l'aide d'un grille-pain électrique conforme au libellé de la revendication 1.

### DESCRIPTIF SOMMAIRE DES DESSINS

D'autres objets et avantages de l'invention seront explicités plus en détail dans la description qui suit, à l'aide des dessins annexés illustrant de manière illustrative et non limitative l'invention dans lesquels :
- La figure 1 illustre selon une vue latérale partielle d'un grille-pain les moyens de sécurité conformes à l'invention en position inactive.
- La figure 2 illustre selon une vue latérale partielle d'un grille-pain analogue à celle de la figure 1, la position active des moyens de sécurité conformes à l'invention assurant le verrouillage du chariot porte-pain en position de grillage.
- La figure 3 illustre selon une vue de partielle selon la flèche F de la figure 2, des détails de réalisation des moyens de sécurité conformes à l'invention.
- La figure 4 illustre selon une vue latérale partielle d'un grille-pain une variante de réalisation des moyens de sécurité conformes à l'invention en position active.
- La figure 5 illustre selon une vue latérale partielle d'un grille-pain analogue à celle de la figure 4 une variante de réalisation des moyens de sécurité conformes à l'invention en position inactive de déverrouillage.
- La figure 6 illustre selon une vue en perspective partielle une seconde variante de réalisation des moyens de sécurité conformes à l'invention illustrant un électroaimant positionné horizontalement.
- La figure 7 montre une vue en perspective identique à celle de la figure 6, illustrant le montage relatif des pièces composant les moyens de sécurité conformes à l'invention.

### MEILLEURE MANIERE DE REALISER L'INVENTION

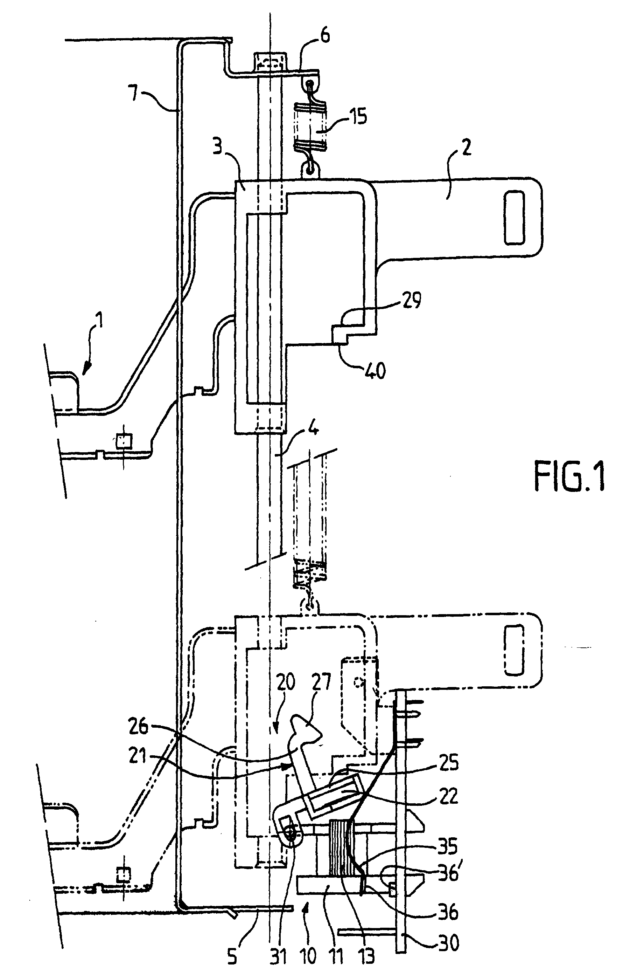

Les figures 1 à 7 illustrent selon des vues partielles, un grille-pain électrique comportant un bâti principal à partir duquel sont montés les différents éléments constitutifs de l'appareil (non représenté aux figures) se présentant sous la forme classique d'un boîtier pourvu d'une embase et de parois extérieures délimitant au moins un compartiment de grillage pourvu à son extrémité supérieure d'un ou plusieurs orifices d'introduction du produit panifié à griller. Chaque compartiment de grillage est associé, de manière connue, à une ou plusieurs résistances électriques, par exemple du type à quartz ou autre, susceptibles de fournir l'énergie nécessaire au grillage du produit panifié. De manière également classique, les résistances électriques sont associés à des organes électriques et électroniques de commande et contrôle du cycle de grillage, ainsi que d'organes de commande manuels de temporisation et des éléments de connexion électriques nécessaires, du genre câbles ou fils par exemple, pour assurer les connexions entre les différents éléments d'une part et avec le secteur d'alimentation électrique d'autre part. De tels éléments constructifs étant bien connus de l'homme du métier, la structure interne du grille-pain électrique conforme à l'invention ne sera en conséquence pas décrite plus en détail.

Selon l'invention, le grille-pain électrique comporte un bâti principal incluant un chariot porte-pain 1 monté mobile dans un compartiment de grillage sous la commande d'un levier de commande 2 susceptible d'être actionné par l'utilisateur de grille-pain. Le chariot porte-pain 1 est monté mobile en translation par l'intermédiaire d'un chariot 3 assurant la liaison entre le chariot porte-pain 1 et le levier de commande 2. Le chariot 3 est guidé en translation verticale sur une colonne de guidage 4 interposée dans le bâti du grille-pain entre une patte inférieure 5 et une patte supérieure 6 solidaire d'un montant 7 du grille-pain. Le grille pain comporte également un électroaimant 10 monté dans la partie basse du bâti et comportant une carcasse 11 de montage sur laquelle est fixée la bobine 12 entourant le noyau 13 de l'électroaimant. Selon ce montage, le chariot porte-pain 1 est donc monté mobile dans le compartiment de grillage entre une position basse de grillage du pain dans laquelle ledit chariot ferme, par l'intermédiaire du chariot 3 et de moyens de contact électriques appropriés, le circuit de puissance du ou des résistance(s) électrique(s) et est maintenu dans cette position par interaction avec l'électroaimant 10, ledit chariot pouvant occuper également une position haute destinée à l'introduction du pain.

Le grille-pain électrique selon l'invention comporte également des moyens de sécurité électrique destinés à interrompre l'alimentation électrique de la ou des résistance(s) électrique(s) en fin de cycle de grillage indépendamment de la position du chariot porte-pain 1 afin d'éviter en cas de coincement ou blocage du chariot porte-pain 1 dans sa position basse de grillage le maintien de l'alimentation électrique de la ou des résistance(s) électrique(s).

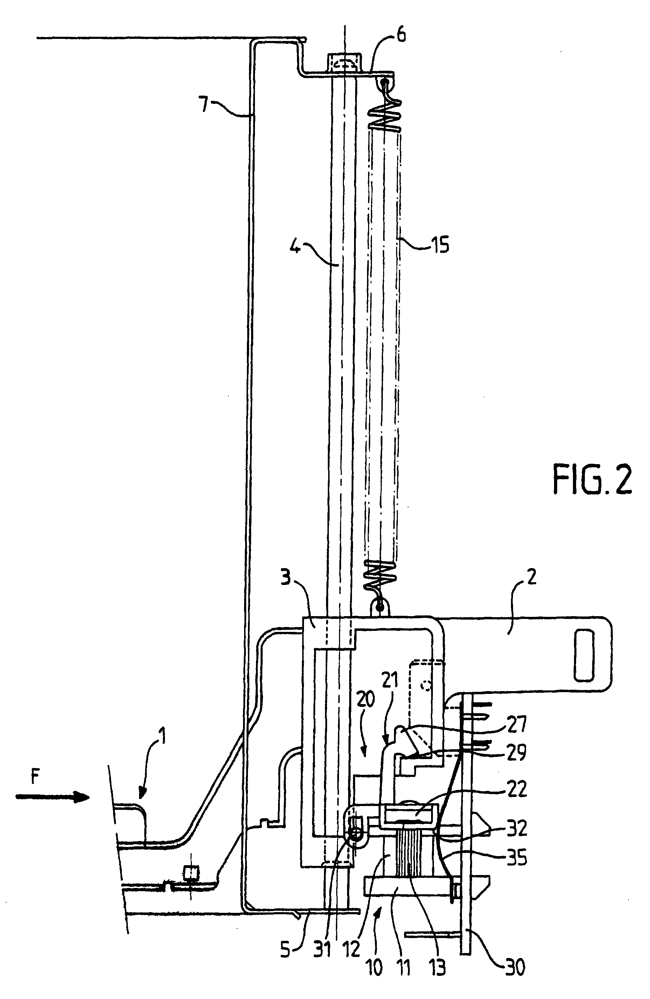

Tel que cela est visible aux figures 1 et 2, le chariot porte-pain 1 est monté avec une possibilité de rappel élastique vers sa position haute par l'intermédiaire d'un ressort de rappel 15 interposé par exemple entre le chariot de commande 3 et la patte supérieure 6.

Selon l'invention, le grille-pain électrique comporte des moyens de sécurité qui sont formés par un sous-ensemble 20 indépendant du chariot porte-pain 1 et comportant :
- un organe de verrouillage 21 apte à verrouiller le chariot porte-pain 1 en position basse,
- une masse polaire 22 apte à interagir avec l'électroaimant 10,
- au moins un organe de contact 32 apte à fermer/ouvrir le circuit électrique de la ou des résistance(s) électrique(s),
ledit sous-ensemble étant monté mobile dans ou sur le bâti de manière à être engagé par le chariot porte-pain 1 lorsque ce dernier est sensiblement dans sa position basse, entre d'une part une position active dans laquelle l'organe de verrouillage 21 verrouille le chariot porte-pain 1 dans sa position basse de grillage tout en interagissant par sa masse polaire 22 avec l'électroaimant 10 et en fermant le circuit électrique de la ou des résistance(s) électrique(s), et d'autre part une position inactive dans laquelle l'organe de verrouillage 21 libère le chariot porte-pain 1 sans interaction de la masse polaire 22 avec l'électroaimant 10 tout en ouvrant le circuit électrique de la ou des résistance(s) électrique(s).

Grâce à l'existence et au montage du sous-ensemble mobile 20, le circuit électronique du grille-pain peut, en fin du cycle de temporisation, couper l'alimentation de l'électroaimant 10, ce qui libère la masse polaire 22 dont l'organe de contact 32 ouvre le circuit électrique des résistances électriques même si le chariot porte-pain 1 est bloqué.

Selon une version particulièrement avantageuse de l'invention, le sous-ensemble 20 comporte un plateau 25 de protection susceptible de recouvrir l'électroaimant 10 lorsque le sous-ensemble 20 occupe sa position active (figure 2). Grâce à cette particularité, il est ainsi possible de protéger la surface de contact entre le sous-ensemble 20 et l'électroaimant 10 de toute agression extérieure, et notamment de l'interposition de miettes ou débris susceptibles d'interagir de manière négative avec la connexion/déconnexion électrique de l'alimentation des résistances électriques. La sécurité globale de l'appareil est ainsi améliorée.

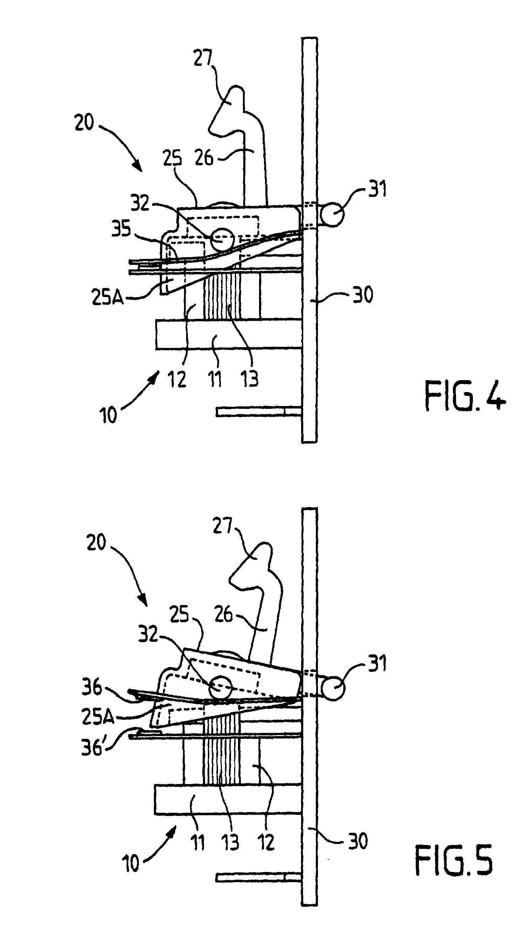

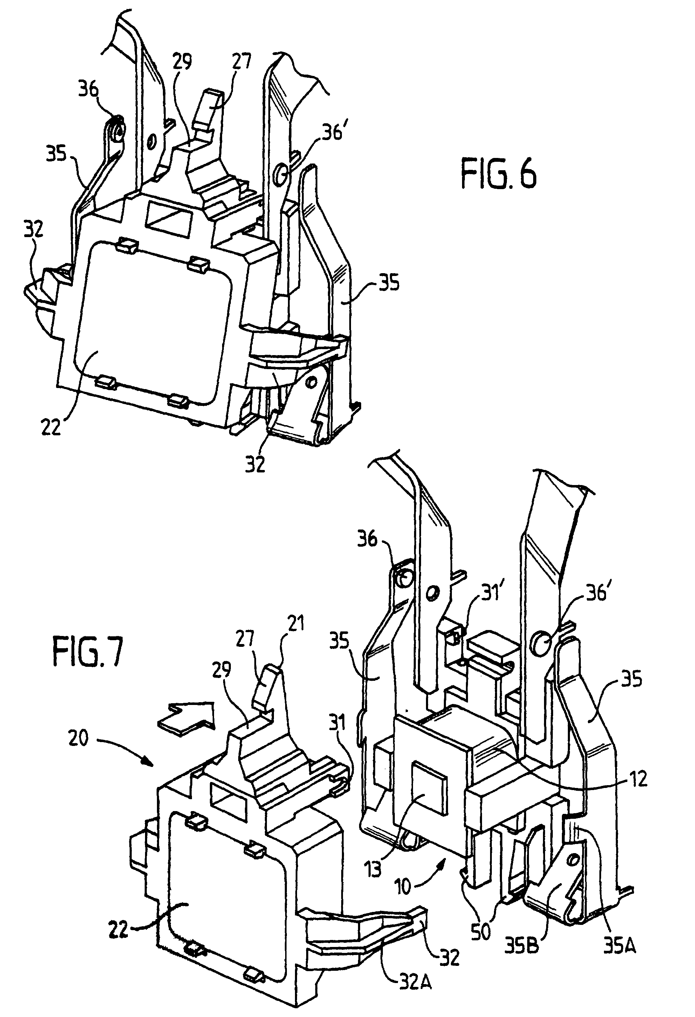

Selon l'invention, le sous-ensemble 20 peut être monté mobile sur l'électroaimant 10, et par exemple sur sa carcasse 11. Bien évidemment, à titre de variante, il est possible de monter le sous-ensemble 20 sur d'autres éléments du bâti, et par exemple directement sur le support 30 du circuit électronique intégré (figures 4 et 5) gérant l'ensemble du cycle de grillage.

De manière avantageuse, le sous-ensemble 20 est formé par le plateau central 25 qui supporte la masse polaire 22, et à partir duquel fait saillie au moins un bras 26 dont l'extrémité porte l'organe actif de verrouillage, par exemple un crochet 27. Dans la variante de réalisation représentée aux figures 1 à 3, le plateau 25 est sensiblement plan et rectangulaire, le bras 26 s'étendant dans un plan sensiblement perpendiculaire au plan d'extension du plateau 25. Le crochet 27 possède une forme appropriée et conjuguée à une surface d'appui 29 ménagée sur le chariot de commande 3 afin d'assurer un verrouillage efficace du chariot porte-pain 1sans gêner son déverrouillage ultérieur. Le plateau 25 est monté en rotation sur électroaimant par un axe 31, par exemple par l'intermédiaire d'une patte de montage et comporte au moins une branche latérale 32, s'étendant avantageusement dans le plan d'extension du plateau 25 pour former l'organe de contact électrique du sous-ensemble 20.

Dans l'exemple de réalisation illustré aux figures 1 à 3, le sous-ensemble 20 est directement monté sur la carcasse 11 de l'électroaimant 10 et relativement à dernier dans et sur le bâti pour que leurs surfaces respectives de contact soient sensiblement horizontales lorsque le grille-pain est en position normale d'utilisation sur une surface de référence horizontale.

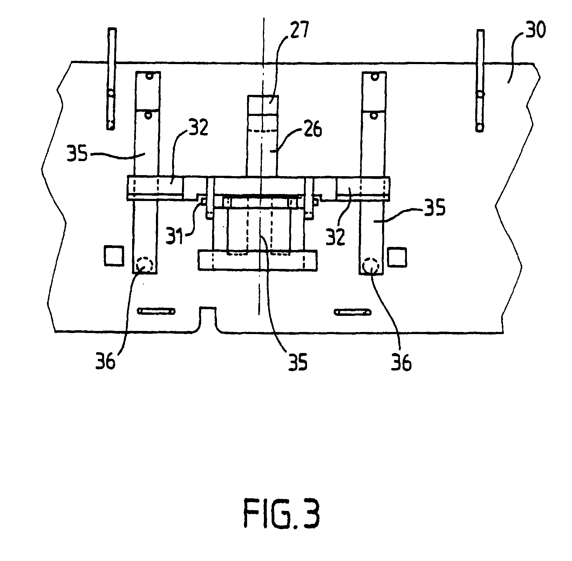

Avantageusement, tel que cela est montré à la figure 3, le sous-ensemble 20 comprend deux branches latérales 32 opposées et situées de part et d'autre du plateau central 20 pour former deux organes de contact du sous-ensemble 20 lorsque le grille-pain nécessite une connectique électrique bipolaire séparant la phase du neutre. Le grille-pain selon l'invention comporte également des lames ressort 35 métalliques, montées dans ou sur le bâti en regard des organes de contact 32, c'est à dire en regard des branches 32. Les lames ressort 35 sont avantageusement montées sur le support 30 du circuit imprimé et supportent à leurs extrémités des contacteurs 36 destinés à assurer la connexion électrique avec des contacteurs appariés 36' assurant par une connectique appropriée, la connexion électrique avec la ou les résistance(s) électrique(s) lorsque les lames ressorts 35 sont engagées par l'organe de contact 32 résultant du déplacement du sous-ensemble mobile 20. De manière avantageuse, les lames ressorts 35 sont incurvées de manière à fournir une force de dégagement supplémentaire aidant le sous-ensemble 20 à reprendre sa position inactive (figure 1) lorsque l'alimentation de l'électroaimant 10 est coupée.

De manière avantageuse, le sous-ensemble 20 et l'électroaimant 10 seront réalisés en matière plastique isolante ayant de bonnes qualités mécaniques, par exemple de type polyamide 66 chargé à 30% de fibres de verre ou équivalent. Les lames ressorts seront avantageusement réalisées en bronze phosphoreux (CuSn8 ½ ), et la masse polaire étant avantageusement en acier zingué bichromatée. Les contacteurs 36, 36' pourront être avantageusement réalisés en cuivre revêtu d'une couche d'argent (AgNi) de 10 microns d'épaisseur environ. A titre de variante, les contacts électriques 36, 36' pourront également être formés par une goutte d'argent déposée directement sur les lames ressorts 35.

### Le fonctionnement du sous-ensemble 20 est le suivant :

Lorsque l'utilisateur actionne le levier de commande 2 pour descendre le chariot porte-pain 1 vers sa position basse de grillage (figure 2), le chariot de commande 3 descend verticalement le long de la colonne de guidage 4. Au voisinage de la position basse de butée du chariot porte-pain 1, une nervure d'appui 40 du chariot de commande 3 engage une surface d'appui correspondante sur le sous-ensemble 20 qui bascule alors autour de son axe de rotation 31 pour passer de sa position inactive illustrée à la figure 1 à sa position active illustrée à la figure 2. Lors de ce basculement, les branches 32 viennent engager et presser les lames ressorts 35, ce qui ferme le circuit d'alimentation des résistances électriques du grille-pain. Simultanément, lors de ce basculement, le crochet 27 vient engager la surface d'appui 29 du chariot de commande 3 pour assurer le verrouillage dudit chariot 3, et par là même du chariot porte-pain 1 dans la position basse de grillage illustrée à la figure 2.

Dans cette position de verrouillage, l'électroaimant 10 est alors alimenté et maintient la masse polaire 22 en place, ce qui a pour effet de maintenir le sous-ensemble 20 dans sa position de verrouillage mécanique du porte-pain et d'alimentation des résistances électriques. Le cycle de grillage peut alors débuter selon le cycle prévu au préalable par l'utilisateur.

L'ensemble du dispositif est réalisé de manière que, lorsque l'utilisateur cesse d'appuyer sur le levier de commande 2, le chariot porte-pain 1 remonte, sous l'action du ressort 15, d'une course de quelques millimètres jusqu'à ce que la surface 29 soit en contact avec le crochet 27 pour permettre une position du sous-ensemble 20 permettant ultérieurement de basculer librement de sa position de verrouillage à sa position de déverrouillage.

En fin de cycle de grillage, le système électronique de temporisation coupe automatiquement l'alimentation de l'électroaimant 10, ce qui a pour effet de libérer la masse polaire 22 de sa position de contact avec la bobine 13. Le sous-ensemble 20 est alors libre de basculer vers sa position inactive autour de l'axe de rotation 31 sous l'effet de la force d'éjection fournie par les lames ressorts 35. Ainsi, les lames ressorts 35 reviennent à leur position naturelle de repos (illustrée à la figure 1) créant un espace suffisant entre les contacts 36, 36' pour assurer la coupure du circuit de puissance. Dans cette situation, même si le chariot porte-pain 1 est bloqué pour une raison quelconque, la coupure de l'alimentation est assurée. Selon un cycle normal de grillage, le chariot porte-pain 1 est libéré et remonte jusqu'à sa position de repos illustrée à la figure 1 sous l'effet de traction du ressort 15.

Les figures 4 et 5 illustrent une variante de réalisation qui ne diffère de la variante principale illustrée précédemment que par un agencement sensiblement différent. Ainsi, le plateau 25 de protection est pourvu d'une jupe latérale enveloppante 25A destinée à entourer de manière sensiblement complète la surface horizontale de collage de l'électroaimant 10 en le recouvrant latéralement sur tous ses côtés, au moins sur la partie supérieure de la bobine 12 et du noyau 13. Grâce à cette particularité, la protection de la zone de contact magnétique est améliorée et empêche le dépôt de tout corps étranger, et notamment des miettes de pain.

Selon cette variante, le sous-ensemble mobile 20 est monté articulé directement sur le support 30 du circuit électronique, l'axe d'articulation 31 étant cette fois-ci fixé réalisée à l'aide d'une perforation dans le support 30. Tel que cela est visible aux figures 4 et 5, les lames ressorts 35 reliées au circuit électronique s'étendent sensiblement perpendiculairement au plan du support 30 de manière à être engagées de manière frontale par les branches latérales 32. En outre, les branches latérales 32 sont disposées de manière à être sensiblement centrées relativement au noyau 13 de l'électroaimant 10 de manière à obtenir un bon centrage des efforts mécaniques sur l'électroaimant 10, favorisant la qualité de la connexion électrique et la tenue mécanique générale de l'ensemble.

Les figures 6 et 7 illustrent une autre variante de réalisation qui ne diffère des variantes précédentes que par un agencement dans l'espace différent.

Ainsi, selon cette variante, la surface de contact entre la masse polaire 22 et le noyau 13 de l'électroaimant 10 est sensiblement verticale en considération d'une position normale d'utilisation du grille-pain dans laquelle le boîtier s'étend sensiblement verticalement. Grâce à cette disposition, le dépôt de corps étrangers et en particulier de miettes sur la surface de contact électrique est quasiment inexistant, ce qui contribue à augmenter la sécurité de fonctionnement du grille-pain. Selon cette variante, l'axe principal de la bobine 13 est donc disposé de manière sensiblement horizontale dans le bâti du grille-pain.

Selon la variante représentée aux figures 6 et 7, le sous-ensemble 20 et l'électroaimant 10 forment un composant unique réalisé avantageusement en matériau plastique, apte à être montée directement sur le bâti du grille-pain 1, par exemple par l'intermédiaire de clips plastiques 50. Selon cette variante, le sous-ensemble 20 est articulé par son axe 31 sur la carcasse de l'électroaimant 10, par exemple dans des dégagements correspondants 31'. Bien évidemment, au lieu d'être monté directement sur le bâti du grille-pain, un tel composant unique, formant une unité monobloc, peut être monté directement sur le support 30 du circuit électronique du grille-pain en vue de réduire les éléments de connectique.

Selon cette variante, les branches latérales 32 possèdent des rampes inclinées 32A destinées à entrer en contact avec des rampes correspondantes 35A ménagées sur les lames ressorts 35 pour assurer leur déplacement lors de la rotation du sous-ensemble 20. Selon les variantes représentées, les lames ressorts 35 se présentent sous la forme de lames relevées, insérées par exemple par emboîtement ou surmoulage sur la carcasse plastique de l'électroaimant 10 et comportant à leurs parties inférieures une cosse 35B d'arrivée du courant. L'inclinaison des rampes 32A ainsi que celles correspondantes des rampes 35A sont déterminées de manière à exercer un effort suffisant sur les contacts électriques pendant la fermeture tout en conservant la faculté de repousser élastiquement le sous-ensemble 20 vers sa position inactive lorsque l'alimentation de la bobine 13 est coupée.

Selon cette variante de réalisation, la position du crochet 27 par rapport à l'axe de rotation 31 et à l'axe horizontal de la bobine 12 sont conjugués de manière à soulager l'effort demandé par l'électroaimant 10 pour retenir le chariot porte pain 1 en position de grillage par un effet de levier.

### POSSIBILITE D'APPLICATION INDUSTRIELLE

L'invention trouve son application industrielle dans la conception et la fabrication de grille-pains.

## Revendications

1. Grille-pain électrique comportant un bâti principal incluant :
- un compartiment de grillage associé à une ou plusieurs résistances électriques,
- un chariot porte-pain (1) monté mobile dans le compartiment de grillage entre une position basse de grillage du pain permettant de fermer le circuit de puissance du (des) résistance(s) électrique(s), ledit chariot étant maintenu dans cette position par interaction avec un électroaimant (10), et une position haute destinée à l'introduction du pain,
- des moyens de sécurité électrique destinés à interrompre l'alimentation électrique de la (des) résistance(s) électrique(s) en fin de cycle de grillage indépendamment de la position du chariot porte-pain (1),
les moyens de sécurité étant formés par un sous-ensemble (20) comportant :
- une masse polaire (22) apte à interagir avec l'électroaimant (10),
- au moins un organe de contact électrique (32) apte à fermer/ouvrir le circuit électrique des résistances électriques,
**caractérisé en ce que** le sous-ensemble comporte un organe de verrouillage (21, 26, 27) apte à verrouiller le chariot porte-pain (1) en position basse, ledit sous-ensemble étant indépendant du chariot porte-pain (1) et étant monté mobile dans ou sur le bâti de manière à être engagé par le chariot porte-pain (1), lorsque ce dernier est sensiblement dans sa position basse, entre d'une part une position active dans laquelle l'organe de verrouillage (21, 26, 27) verrouille le chariot porte-pain (1) dans sa position basse de grillage tout en interagissant par sa masse polaire (22) avec l'électroaimant (10) et en fermant le circuit électrique de la (des) résistance(s) et d'autre part une position inactive dans laquelle l'organe de verrouillage (21, 26, 27) libère le chariot porte-pain (1) sans interaction de la masse polaire (22) avec l'électroaimant (10) tout en ouvrant le circuit électrique de la (des) résistance(s) électrique(s).

2. Grille-pain selon la revendication 1 **caractérisé en ce que** le sous-ensemble (20) comporte un plateau de protection (25) susceptible de recouvrir l'électroaimant (10) lorsqu'il est en position active.

3. Grille-pain selon la revendication 1 ou 2 **caractérisé en ce que** le sous-ensemble (20) est monté mobile sur l'électroaimant (10).

4. Grille-pain selon la revendication 1 ou 2 **caractérisé en ce que** le sous-ensemble (20) est monté mobile sur le bâti, ou sur le support (30) du circuit électronique.

5. Grille-pain selon l'une des revendications précédentes **caractérisé en ce que** le sous-ensemble (20) est formé par un plateau central (25), qui supporte la masse polaire (22), et à partir duquel fait saillie un bras (26) dont l'extrémité porte l'organe actif de verrouillage, ledit plateau étant monté à rotation sur l'électroaimant (10) par un axe (31) et comportant au moins une branche latérale (32) formant l'organe de contact électrique.

6. Grille-pain selon la revendication 5 **caractérisé en ce que** le sous-ensemble (20) comprend deux branches latérales (32) opposées, et situées de part et d'autre du plateau central (25) pour former deux organes de contact.

7. Grille-pain selon l'une des revendications précédentes **caractérisé en ce qu'**il comprend des lames ressort (35) montées dans le bâti en regard des organes de contact pour supporter des contacteurs (36) assurant la connexion électrique avec la (les) résistance(s) électrique(s) lorsqu'elles sont engagées par l'organe de contact (32).

8. Grille-pain selon l'une des revendications précédentes **caractérisé en ce que** le sous-ensemble (20) et l'électroaimant (10) sont montés dans ou sur le bâti pour que leur surface de contact soit sensiblement horizontale.

9. Grille-pain selon l'une des revendications 1 à 7 **caractérisé en ce que** le sous-ensemble (20) et l'électroaimant (10) sont montés dans ou sur le bâti pour que leur surface de contact soit sensiblement verticale.

10. Grille-pain selon l'une des revendications précédentes **caractérisé en ce que** le sous-ensemble (20) et l'électroaimant (10) forment un composant unique apte à être monté directement dans le bâti du grille-pain.

## Claims

1. Electric toaster comprising a main frame including:
- a toasting compartment associated with one or more electrical resistors,
- a bread holder (1) movably mounted in the toasting compartment between a low bread-toasting position allowing closure of the power circuits of the electrical resistor(s), said holder being retained in this position by interaction with an electromagnet (10), and a high position intended for introduction of the bread,
- electrical safety means intended to interrupt the power supply to the electrical resistor(s) at the end of the toasting cycle irrespective of the position of the bread holder (1),
the safety means being formed by a sub-assembly (20) comprising:
- a polar mass (22) able to interact with the electromagnet (10),
- at least one electrical contact element (32) able to close/open the electrical circuit of the electrical resistors,
**characterised in that** the sub-assembly comprises a locking element (21, 26, 27) able to lock the bread holder (1) in the lower position, said sub-assembly being independent of the bread holder (1) and being movably mounted in or on the frame in order to be engaged by the bread holder (1) when the latter is approximately in its lower position, between firstly an active position in which the locking element (21, 26, 27) locks the bread holder (1) in its lower toasting position by interaction of its polar mass (22) with the electromagnet (10), closing the electrical circuit of the resistor(s), and secondly an inactive position in which the locking element (21, 26, 27) releases the bread holder (1) without interaction of the polar mass (22) with the electromagnet (10) opening the electrical circuit of the electric resistor(s).

2. Toaster according to claim 1, **characterised in that** the sub-assembly (20) comprises a protection plate (25) able to cover the electromagnet (10) when in the active position.

3. Toaster according to claim 1 or 2, **characterised in that** the sub-assembly (20) is movably mounted on the electromagnet (10).

4. Toaster according to claim 1 or 2, **characterised in that** the sub-assembly (20) is movably mounted on the frame or on the electronic circuit support (30).

5. Toaster according to any of the previous claims, **characterised in that** the sub-assembly (20) is formed by a central plate (25) which supports the polar mass (22) and from which projects an arm (26), the end of which carries the active locking element, said plate being rotatably mounted on the electromagnet (10) by way of a shaft (31) and comprising at least one lateral branch (32) forming the electrical contact element.

6. Toaster according to claim 5, **characterised in that** the sub-assembly (20) comprises two opposite lateral branches (32) situated either side of the central plate (25) to form two contact elements.

7. Toaster according to any of the previous claims, **characterised in that** it comprises spring plates (35) mounted in the frame opposite the contact elements to support the switches (36) ensuring the electrical connection with the electrical resistor(s) when engaged by the contact element (32).

8. Toaster according to any of the previous claims, **characterised in that** the sub-assembly (20) and the electromagnet (10) are mounted in or on the frame so that their contact surface remains approximately horizontal.

9. Toaster according to any of claims 1 to 7, **characterised in that** the sub-assembly (20) and the electromagnet (10) are mounted in or on the frame so that the contact surface is approximately vertical.

10. Toaster according to any of the previous claims, **characterised in that** the sub-assembly (20) and the electromagnet (10) form a single component able to be mounted directly in the frame of the toaster.

## Patentansprüche

1. Elektrischer Toaster mit einem Gehäuse, das im wesentlichen umfasst:
- einen Abschnitt zum Toasten, der einen oder mehreren elektrischen Widerständen zugeordnet ist,
- eine Brotfördereinrichtung (1), die beweglich angeordnet ist in dem Abschnitt zum Toasten zwischen einer unteren Position zum Toasten des Brots, die es ermöglicht die Leistungsschaltung des/der elektrischen Widerstands(e) zu schliessen,
wobei die Fördereinrichtung in dieser Position gehalten ist durch die Einwirkung eines Elektromagneten (10), und einer oberen Position zum Einlegen des Brots,
- elektrischen Sicherheitseinrichtungen, die vorgesehen sind, die elektrische Versorgung des/der elektrischen Widerstands(e) am Ende des Toastzyklusses zu unterbrechen unabhängig von der Position der Brotfördereinrichtung (1),
wobei die Sicherheitseinrichtungen gebildet sind aus einer Untergruppe (20) mit:
- einer Pol-Masse (22), die geeignet ist mit dem Elektromagneten (10) zusammen zu wirken,
- mindestens einem elektrischen Schaltelement (32), das geeignet ist die elektrische Schaltung des/der elektrischen Widerstands(e) zu schliessen/öffnen,
**dadurch gekennzeichnet, dass** die Untergruppe ein Verriegelungselement (21, 26, 27) aufweist, das geeignet ist, die Brotfördereinrichtung (1) in der unteren Position zu verriegeln, wobei die Untergruppe unabhängig ist von der Brotfördereinrichtung (1) und beweglich montiert ist in oder auf dem Gehäuse, so dass sie erfasst wird von der Brotfördereinrichtung (1), wenn diese letztere eigentlich in ihrer unteren Position ist, zwischen einerseits einer aktiven Position, in der das Verriegelungselement (21, 26, 27) die Brotfördereinrichtung (1) verriegelt in seiner unteren Position zum Toasten, wobei insgesamt seine Pol-Masse (22) mit dem Elektromagneten (10) zusammen wirkt und durch Schliessen der elektrischen Schaltung des/der elektrischen Widerstands(e), und andererseits einer inaktiven Position, in der das Verriegelungselement (21, 26, 27) die Brotfördereinrichtung (1) freigibt ohne Zusammenwirken der Pol-Masse (22) mit dem Elektromagneten (10) durch Öffnen der elektrischen Schaltung des/der elektrischen Widerstands(e).

2. Toaster gemäß Anspruch 1, **dadurch gekennzeichnet, dass** die Untergruppe (20) eine Schutzplatte (25) aufweist zur Abdeckung des Elcktromagneten (10), wenn er in seiner aktiven Position ist.

3. Toaster gemäß Anspruch 1 oder 2, **dadurch gekennzeichnet, dass** die Untergruppe (20) beweglich auf dem Elektromagneten (10) montiert ist.

4. Toaster gemäß Anspruch 1 oder 2, **dadurch gekennzeichnet, dass** die Untergruppe (20) beweglich auf dem Gehäuse oder dem Träger (30) des elektronischen Schaltkreises montiert ist.

5. Toaster gemäß einem der vorhergehenden Ansprüche, **dadurch gekennzeichnet, dass** die Untergruppe (20) gebildet ist aus einer zentralen Platte (25), die die Pol-Masse (22) trägt und von der ein Arm (26) ragt dessen Ende das aktive Verriegelungselement trägt, wobei die Platte drehbar montiert ist zum Elektromagneten (10) um eine Achse (31) und mindestens einen seitlichen Ausleger (32) aufweist, der das elektrische Schaltelement bildet.

6. Toaster gemäß Anspruch 5, **dadurch gekennzeichnet, dass** die Untergruppe (20) zwei gegenüber und auf einer und der anderen Seite der zentralen Platte (25) liegende, seitliche Ausleger (32) umfasst, um zwei elektrische Schaltelement zu bilden.

7. Toaster gemäß einem der vorhergehenden Ansprüche, **dadurch gekennzeichnet, dass** Federplättchen (35) vorgesehen sind, die in dem Gehäuse montiert sind in Bezug zu den Schaltelementen um die Kontakte (36) zu halten und so die elektrische Verbindung zu gewährleisten mit dem/den elektrischen Widerstand(en), wenn diese vom Schaltlement (32) beaufschlagt sind.

8. Toaster gemäß einem der vorhergehenden Ansprüche, **dadurch gekennzeichnet, dass** die Untergruppe (20) und der Elektromagnet (10) in oder auf dem Gehäuse montiert sind, so dass ihre Kontaktfläche im wesentlichen horizontal sei.

9. Toaster gemäß einem der Ansprüche 1 bis 7, **dadurch gekennzeichnet, dass** die Untergruppe (20) und der Elektromagnet (10) in oder auf dem Gehäuse montiert sind, so dass ihre Kontaktfläche im wesentlichen vertikal sei.

10. Toaster gemäß einem der vorhergehenden Ansprüche, **dadurch gekennzeichnet, dass** die Untergruppe (20) und der Elektromagnet (10) eine einzige Komponente bilden, die geeignet ist direkt in dem Gehäuse des Toasters montiert zu werden.
